# EUROPEAN PATENT SPECIFICATION

(11) **EP 1 325 259 B1**
(45) Date of publication and mention of the grant of the patent: **02.08.2006**
(21) Application number: 01964507.6
(22) Date of filing: 30.08.2001
(51) Int. Cl.: F16L 55/00

(54) **A MEMBER FOR REMOVABLY CLOSING A CYLINDRICAL OPENING**
EINRICHTUNG ZUM VORÜBERGEHENDEN SCHLIESSEN EINER ZYLINDRISCHEN ÖFFNUNG
ELEMENT PERMETTANT D'OBTURER UNE OUVERTURE CYLINDRIQUE DE FACON AMOVIBLE

(30) Priority: 01.09.2000 US 229853 P; 09.01.2001 US 757188
(43) Date of publication of application: 09.07.2003
(73) Proprietor: TDW DELAWARE, INC., Wilmington, Delaware 19801 (US)
(72) Inventor: WILSON, Buddy, A., Sapulpa, OK 74066 (US); BILLINGTON, Randy, B., Tulsa, OK 74127 (US); BINGHAM, Bruce, W., Broken Arrow, OK 74012 (US); GARRISON, Tony, R., Bixby, OK 74008 (US); MORGAN, Mark, A., Tulsa, OK 74135 (US)
(74) Representative: Van Straaten, Joop
(86) International application number: PCT/US2001/026993
(87) International publication number: WO 2002/018835

(56) References cited:
- EP-A- 0 543 388
- DE-A- 3 707 601
- GB-A- 2 134 206
- US-A- 5 450 765
- US-A- 5 975 142

## Description

### Background of the Invention

According to the preamble of claim 1, the present invention relates to a removable closure member as it is disclosed in US-A-4 387 740.

It is frequently necessary to close an opening in a tubular member either permanently or semi-permanently -- that is, to close an opening where a valve is not required or is not desirable. One example of a semipermanent closure arises when a hot tap is made into a pipeline through a fitting connected to the pipeline. In the typical hot tapping application as utilized in the petroleum industry, a fitting, usually in the form of a flange, is welded on the exterior of a pipeline that has flowing gas or liquid under pressure. A valve is then secured to the flange and a hot tapping machine secured to the valve. By use of highly specialized equipment, a hole can then be drilled through the wall of the pipeline while gas or liquid continues to flow through it. By this means access is provided to the interior of the pipeline, such as for inserting equipment to temporarily block flow through the pipeline while repairs are made. After the repairs are complete, the tapping equipment is removed and the opening that provides communication to the interior of the pipeline needs to be closed. Preferably the closure is made in such a way that at some future date access can again be obtained through the fitting to the interior of the pipeline. The disclosure herein provides a system for removably closing a tubular fitting, such as the one described.

For background information relating to closure devices, reference may be had to the following United States patents:

| **PATENT NO.** | **INVENTOR** | **TITLE** |
|---|---|---|
| 2,010,200 | Reufener et al. | Sealing Device for Pressure Containers |
| 2,281,145 | Duey | Pipe Plug |
| 2,287,750 | Clayton | Fill Pipe Cap |
| 2,431,778 | Sosaya | Test Cap |
| 2,512,041 | Steele | Temporary Drainpipe Closure |
| 3,114,528 | Forest | Base and Lock Assembly for Pipe |
| 3,155,116 | Ver Nooy | Apparatus for Closing Side Openings into Pipelines |
| 3,179,446 | Paterson | Extension Fitting Having Initial Flexible Lip Seal Gasket |
| 3,483,894 | Finocchiaro | High Pressure Pipe Test Plug |
| 3,765,456 | Karpenko | Chemical Cleaning Line Connector |
| 3,766,947 | Osburn | Fluid Tight Closure |
| 4,377,185 | Katz | Hydrotest Apparatus |
| 4,387,740 | Vanzant | Cam-Flange |
| 4,466,550 | Sullivan | Closure for a Cylindrical Opening Having Improved Venting Means |
| 4,576,778 | Ferree et al. | Core Barrel Plug |
| 4,609,209 | Ralls | Precise Alignment Adapter Flange |
| 4,693,278 | Wilson et al. | Safety Closure Member |
| 4,902,043 | Zillig et al. | Fluid Coupling and Seal Assembly |
| 5,035,266 | Benson et al. | Mechanical Plug for Clean-Out Tees |
| 5,038,830 | Arnaud | Pipe and Sealing Device |
| 5,437,309 | Timmons | Lockable Well Cap |
| 5,450,765 | Stover | Apparatus for Providing Signal Communication Between the Interior and Exterior of a Pipeline |
| 5,975,142 | Wilson | Removable Closure System |

### Brief Summary of the Invention

According to claim 1, this invention provides a removable closure system positionable in a tubular member having a cylindrical opening for the passage of tools or for flow of liquids or gases. In a typical application of the invention, the closure may be in the form of a flange, -- that is, a tubular member that has an integral radially extending flange portion that is readily adaptable for the attachment of other structural or piping devices. The tubular member has an inner end and an outer end and an internal passageway that is defined by a first cylindrical surface of a first internal diameter adjacent the inner end and a second cylindrical surface of a larger internal diameter adjacent the outer end, the different internal diameters providing an internal circumferential ledge. The tubular member second cylindrical surface has an increased internal diameter circumferential groove therein that is spaced from the circumferential ledge.

A cylindrical plug is positioned within the tubular member. The plug has an external diameter greater than the diameter of the tubular member first cylindrical surface and slightly less than the diameter of the second cylindrical surface. The cylindrical plug is thereby telescopically positionable within the tubular member second internal cylindrical surface and in engagement with the circumferential ledge. The cylindrical plug is preferably made to have two external diameters forming an external circumferential ledge that mates against the tubular member internal circumferential ledge.

In the removable closure system, a plug holder has a rotatable actuator directly interconnected with the leaves. When the actuator is rotated in a first direction the leaves are retracted to their collapsed position allowing the plug body to be inserted into or removed from the tubular member passageway and when rotated in the opposite direction the leaves are extended into their expanded positions so that the outer peripheral edge of each leaf extends into the circumferential groove in the tubular member passageway thereby locking the plug body into the passageway. The plug body has a circumferential groove around the lower cylindrical surface that receives an O-ring seal so that when in position within the tubular member, the plug body seals against fluid flow.

In the preferred and illustrated arrangement of the improved removable closure system the actuator moves the leaves between their expanded and contracted positions by cam action-that is, boss portions extending from the rotatable actuator fit into cam shaped slots formed in the leaves so that as the actuator is rotated, the leaves are moved radially inwardly or outwardly with respect to the tubular member passageway wall.

A better understanding of the invention will be obtained from the following description taken in conjunction with the attached drawings.

### Description of the Drawings

Figure 1 is an isometric view of a flange having a cylindrical passageway, shown partially cutaway, and showing an improved plug member locked in place within the flange.
Figure 2 is an isometric view of the plug member shown in Figure 1. Figure 2 illustrates first and second retainer leaves in their withdrawn or collapsed condition as occurs when the plug is in condition to be inserted into or removed from a cylindrical opening.
Figure 3 is the plug member as shown in Figure 2 but showing first and second retainer leaves radially outwardly expanded as occurs when the plug member is in locked position within a cylindrical opening.
Figure 4 is an exploded view showing the relationship between a flange, isometrically illustrated and cutaway, and the plug member of Figures 2 and 3 as the plug member is inserted into or removed from the cylindrical passageway in the flange. A plug holder is attached to the plug member.
Figure 5 shows the plug member and attached plug holder within the flange. The difference between Figures 1 and 5 is that Figure 5 shows the plug holder attached while Figure 1 shows the plug holder removed.
Figure 6 is an exploded view of the removable plug and plug holder. In Figure 6 a ball-type pressure relief system is employed.
Figure 7 is a cross-sectional view of a removable plug member showing details of a pressure relief system.
Figure 8 is an isometric view of an improved cylindrical plug body in which the leaves are semicircular plates with openings therethrough. Each leaf has a substantially semicircular peripheral edge, the leaves being pivotally positionable into collapsed and expanded positions on the plug body upper surface. Figure 8 shows the leaves in the collapsed positions.
Figure 9 is an isometric view of the plug body as in Figure 8 but showing the leaves in expanded positions.
Figure 10 is an elevational view of the improved plug body as shown in Figures 8 and 9 with the left half of the view showing the external appearance and with the right half of the view showing the plug body in cross-section.
Figure 11 is an isometric view showing the plug body of Figures 8, 9 and 10 positioned within a passageway within a tubular member. The tubular member is in the form of a flange. The left side of the plug body is shown in external isometric while the right side is shown in cross-section. Further, Figure 11 shows the plug holder and the actuator that is utilized to move the leaves between collapsed and expanded positions. Figure 11 shows the leaves in their collapsed positions.
Figure 12 is an isometric view as in Figure 11 but shows the leaves in their expanded positions.
Figure 13 is an isometric view of the plug holder that rotatably receives an actuator.
Figure 14 is an isometric view showing the lower surfaces of a plug holder and actuator.
Figure 15 is an elevational view of the plug holder and actuator shown partially in cross-section.

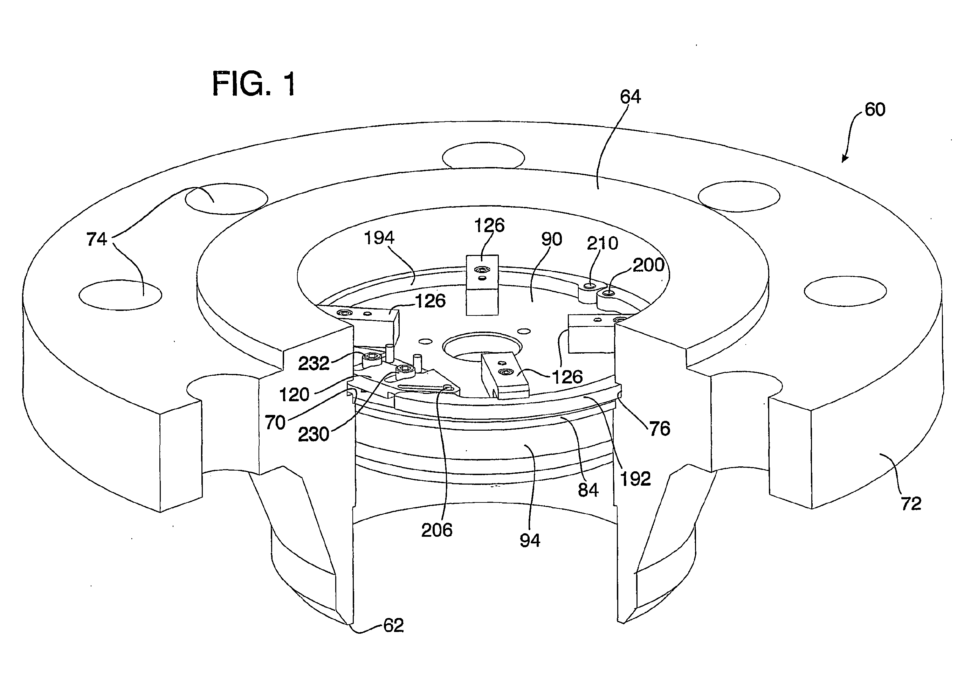

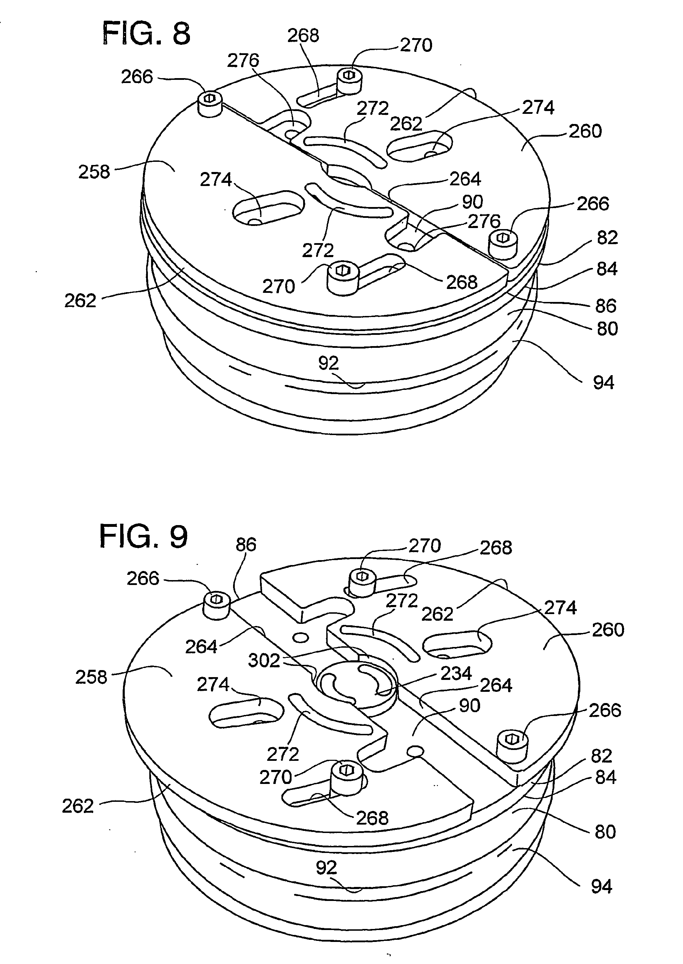

Figures 1-7 show a removable closure system not falling within the scope of the present invention, whereas Figures 8-15 show an embodiment of the system according to the invention.

### Detailed Description of the Preferred Embodiments

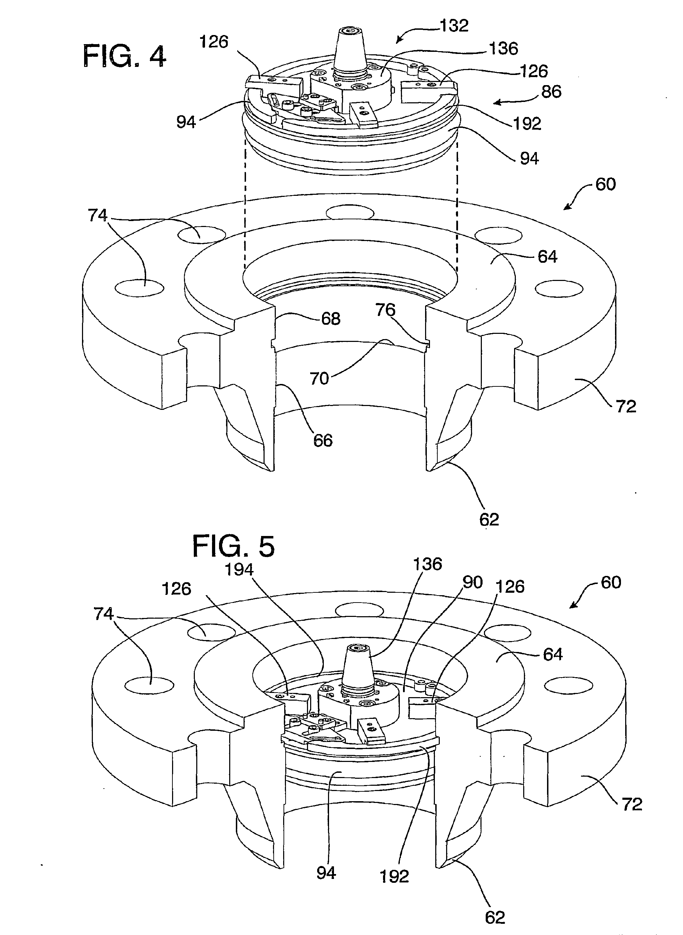

Referring first to Figures 1 and 4, the basic components of a removable closure system are illustrated. A tubular member in the form of a flange generally indicated by the numeral 60 has an inner end 62 and an outer end 64. A passageway is formed through the flange, the passageway being defined by a first cylindrical surface 66 and a slightly enlarged second cylindrical surface 68. Since second cylindrical surface 68 is of larger internal diameter than first cylindrical surface 66 an internal circumferential ledge 70 is formed in the passageway.

Flange 60 typically has an integral radially extending flange portion 72 having bolt opening 74 therein. However, the invention is applicable to any type of tubular device that needs to be removably closed.

Formed in the second cylindrical surface 68 of the flange above ledge 70 is an increased diameter circumferential groove 76.

In the embodiment of Figures 1-7, a plug body has a top surface 90 and an outer circumferential surface that includes external cylindrical surfaces 80 and 82, a circumferential groove 92 and a rubber O-ring 94. The difference in diameters of surfaces 80 and 82 form a circumferential ledge 84. To install or remove the plug member from a flange (the flange being identified by the numeral 60) a plug holder 132 is employed, the plug holder being removably secured to upper surface 90 of the removable plug member by bolts 134.

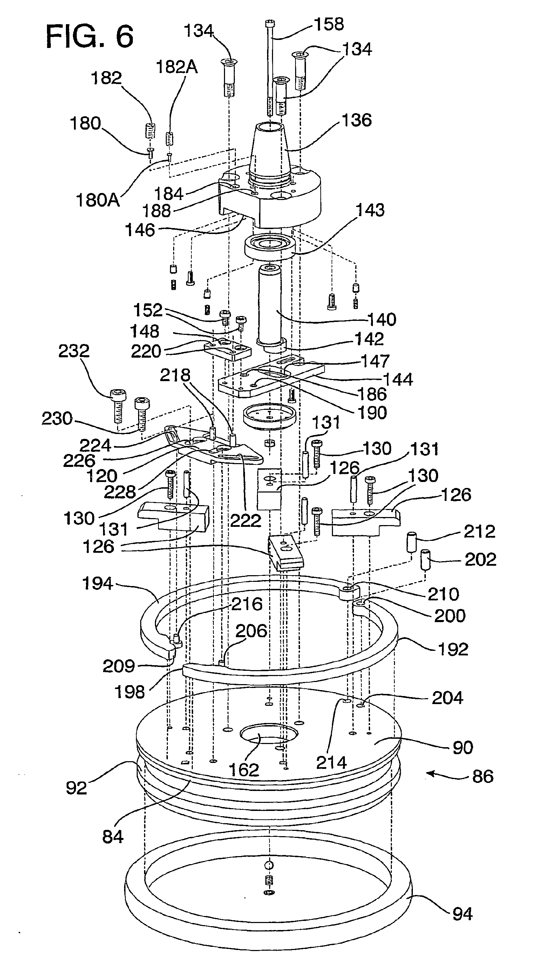

In the embodiment of Figures 1-7, a first retainer leaf 192 and a second retainer leaf 194 are employed. First retainer leaf 192 has a first end 196 and a second end 198. Adjacent to first end 196 is an opening 200 as seen in Figure 6 that receives a pin 202 that extends into an opening 204 in the top surface 90 of plug body 86. Adjacent the second end 198 of first retainer leaf 192 is an upwardly extending pin 206.

In like manner, second retainer leaf 194 has a first end 208 and a second end 209. Adjacent the first end 208 is an opening 210 (see Figure 6) that receives a pin 212 that extends within an opening 214 in top surface 90 of plug body 86. Further, an upwardly extending pin 216 is secured to second retainer leaf 194 adjacent the second end 209.

Retainer leaves 192 and 194 can pivot toward and away from each other around hinge pins 202 and 212 and are guided in sliding position by retainers 126. Each retainer is held in position on plug member top surface 90 by a bolt 130. Each bolt 130 preferably receives a lock washer (not illustrated) to insure retention of the leaves on the plug member top surface. Rotation of retainers 126 is prevented by pins 131.

Plug holder 132 receives a cam shaft 140 (best seen in Figure 6) rotatably supported by a bearing 143. Cam shaft 140 has, on the lower end thereof, a cam portion 142. Slidably positioned on the top surface 90 of plug body 86 is a yoke 144 having an elongated slot 147 therein that receives cam portion 142. As cam shaft 140 is rotated, yoke 144 is reciprocally displaced radially inwardly and outwardly as guided by a slot 146 in the bottom of holder body 136.

Radially positioned by yoke 144 is a link plate 120. Specifically, link plate 120 has upwardly extending pins 218 that are received in openings 220 in a linkage member 148. Linkage member 148 is secured to the outer end of yoke 144 by means of bolts 152. Thus by means of linkage member 148, link plate 120 is moved inwardly and outwardly on upper surface 90 of plug body 86 as cam shaft 140 is rotated.

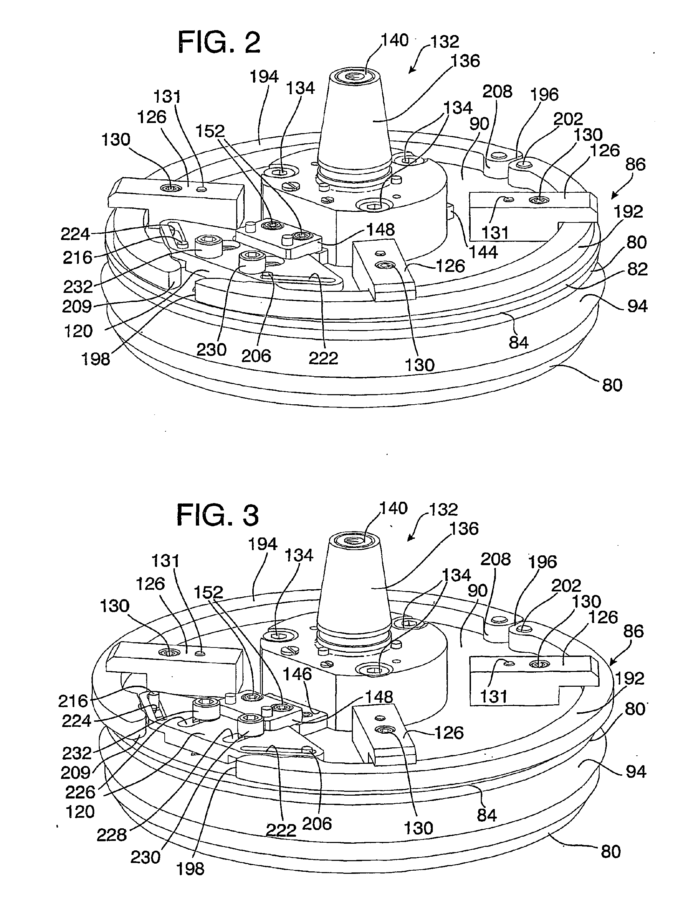

Formed in link plate 120 are first and second elongated slots 222 and 224. Slot 222 slidably receives pin 206 affixed adjacently the second end of first retainer leaf 192 and slot 224 slidably receives pin 216 affixed adjacently the second end of second retainer leaf 194. By the connection of pins 206 and 216 to link plate 120, the rotation of cam shaft 140 radially outwardly expands retainer leaves 192 and 194 or radially inwardly contracts the leaves. Figure 2 shows link plate 120 radially inwardly positioned so that leaves 192 and 194 are radially and inwardly retracted in which case all portions of the leaves are internal of the plug body external cylindrical surface 82. In the condition shown in Figure 2, the plug body can be inserted into or removed from the interior of flange 60. Figure 3 shows link plate 120 radially outwardly positioned, outwardly expanding leaves 192 and 194 to extend beyond circumferential surface 82 of plug body 86 so that when the plug body is positioned within flange 60 the leaves extend into circumferential groove 76 as shown in Figure 1.

To radially guide link plate 120, opposed parallel slots 226 and 228 are provided. These slots receive bolts 230 and 232. Slots 226 and 228 are provided with enlarged area recesses adjacent their inner ends as seen in Figures 2 and 6. When the link plate 120 is radially outwardly expanded to the maximum position as illustrated in Figure 3 (which is the condition in which the plug body 86 is in locked position within a flange) bolts 230 and 232 may be downwardly threaded so that the enlarged heads thereof enter into the enlarged recesses in slots 226 and 228 thereby locking link plate 120 in its outward position and correspondingly locking retainer leaves 192 and 194 in their radially outwardly expanded positions. After a plug body 86 has been inserted into a flange 60 and leaves 192 and 194 radially outwardly expanded, plug holder 132 can be removed from top surface 90 of the plug body by removing bolts 134.

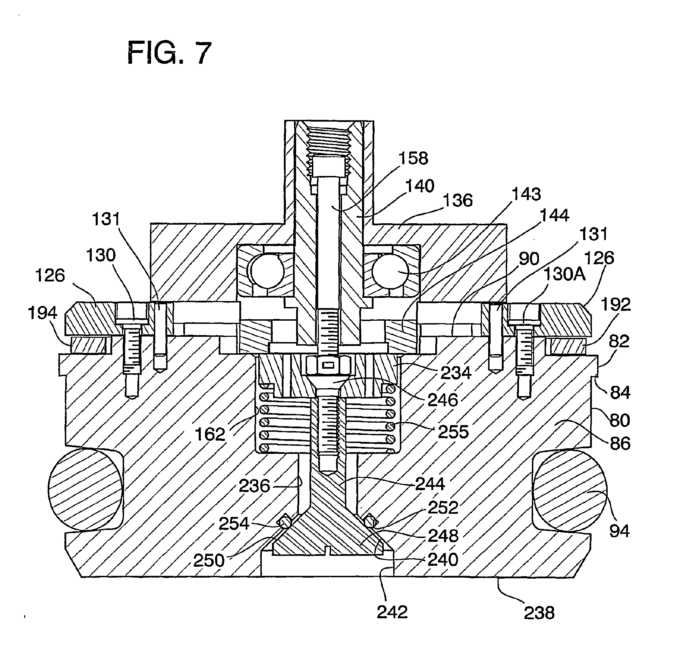

Before a plug member that has been locked in position within a flange is removed it is important that any pressure applied against the plug member from within the system to which the flange is attached is relieved, otherwise if retainer leaves 192 and 194 are retracted the plug could blow out and injure a workman. Figure 7 shows an embodiment of a pressure relief system. In the embodiment of Figure 7, plug body 86 has a larger diameter opening 162 that communicates with top surface 90 and that receives a cylindrical guide member 234. The plug body has a reduced diameter opening 236 extending downwardly toward a bottom surface 238 of the plug member. Reduced opening 236 is flared out into a frusto-conical opening 240 that communicates with a cylindrical lower opening 242. A valve element has a stem portion 244 that is coaxially affixed to the bottom surface of guide 234 by a bolt 246. Stem portion 244 integrally connects with a valve head portion 248 that has a frusto-conical valve sealing surface 250. Received in frusto-conical opening 240 is a circumferential groove 252 that receives an O-ring 254. A downward force on pin 158 urges valve stem 244 and thereby valve head 248 to the lower or valve open condition. A spring 255 urges valve stem 244 and thereby valve head 248 to the upper or valve closed condition. Yoke 144 has a cylindrical recess in its lower surface that receives cylindrical guide 234 when yoke 144 is in its outward position with leaves 192 and 194 radially outwardly extended locking the plug body in position in the flange. When stem 244 is downwardly depressed, thereby downwardly depressing valve head portion 248, pressure within the flange below plug body 86 is relieved. After the pressure is relieved, cam shaft 140 may be rotated to retract leaves 192 and 194 to permit the removal of a plug.

Shear pins 180 and 180A (see the upper portion of Figure 6) that extend through openings 184 and 188 in holder body 136, can, when downwardly extended via spring pins 182 and 182A, enter openings 186 and 190 in yoke 144. Shear pin 180 is received in opening 186 to lock yoke 144 in its outward position - that is, to lock the yoke when leaves 192 and 194 are radially outwardly expanded while shear pin 180A when received in opening 190 functions to lock the yoke in the collapsed position in which the leaves are radially inwardly expanded. The shear pins can be sheared by forced rotation of cam shaft 140. The shear pins serve to provide information to the operator that action of the cam shaft (and thereby yoke 144) has taken place to either move the leaves to their retracted positions or to move the leaves to their expanded positions.

Figures 8-15 disclose an embodiment according to the present invention of a member for removably closing a cylindrical opening. Figures 8 and 9 are isometric views of the improved closure member.
The closure member has a cylindrical body portion with a top surface 90 and with cylindrical walls defined by a first external cylindrical surface 80 and a slightly larger external surface 82. The differences in diameters between the cylindrical surfaces 80 and 82 result in a circumferential ledge 84. An external circumferential groove 92 in cylindrical surface 80 receives a large rubber O-ring 94 that is in the form of a large O-ring.

Positioned in a common plane on plug body 86 is a first leaf 258 and a second leaf 260. Leaves 258 and 260 are formed of flat plates and are of the same configuration. Each of the leaves 258 and 260 have a substantially semicircular peripheral edge 262 and each has a substantially straight inner edge 264.

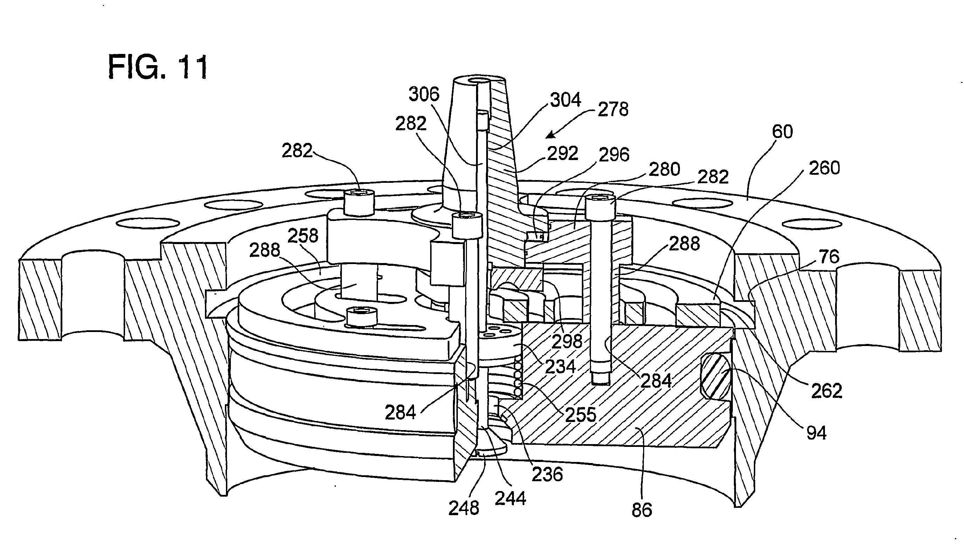

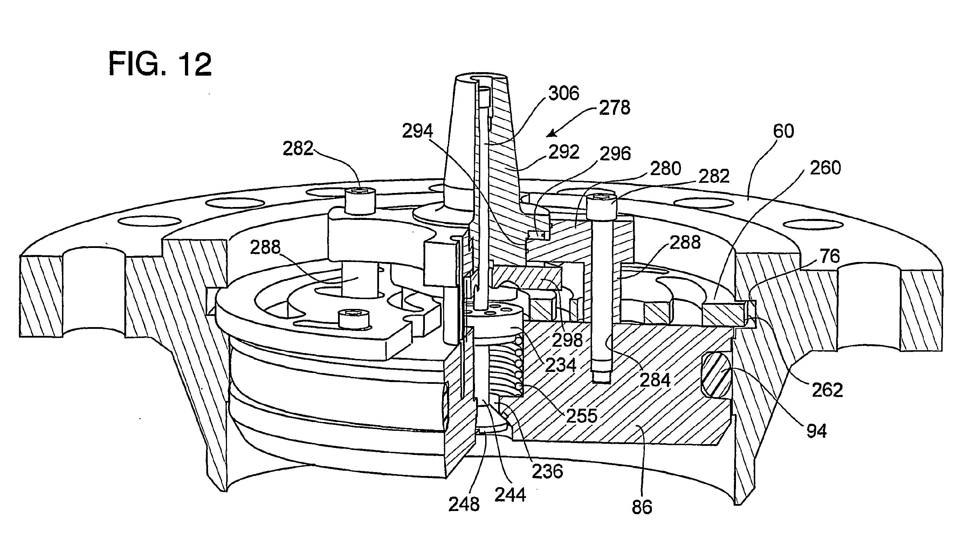

Leaves 258 and 260 are pivotal on plug member top surface 90, each leaf pivoting about a pivot pin 266. Pivot pins 266 are bolts extending through openings in the leaves. The leaves are arranged to have collapsed and expanded positions. Figure 8 shows the leaves in their collapsed position in which their circumferential edges 262 are withdrawn within the confines of the external circumferential surface 82 of the plug body. In the collapsed condition as in Figures 8 and 11, the closure member may be inserted into or removed from a cylindrical opening such as that formed by flange 60 as illustrated in Figures 1, 4 and 5. In the expanded positions of the leaves (as shown in Figure 9) the peripheral edges 262 extend beyond the diameter of the plug body cylindrical surface 82 and when the closure member is positioned within flange 60 of Figures 1, 4 and 5, and extends into circumferential groove 76, thereby locking the closure member in position within the flange. Figure 11 is a cross-sectional view showing leaves 258 and 260 in their collapsed positions while Figure 12 shows the leaves in their expanded positions in which the peripheral edges 262 extend within circumferential groove 76.

Formed in each of the leaves is an arcuate guide slot 268 that receives a guide bolt 270, the bolts being extended into threaded openings in surface 90 of plug body 86. The heads of bolts 270 maintain leaves 258 and 260 in slidable contact with plug body top surface 90. Slots 268 are each formed in an arc relative to pivot pin 266.

The system and method of moving leaves 258 and 260 between their collapsed and expanded positions in the embodiment of the invention in Figures 8-15 is completely different than the embodiment of the invention in Figures 1-7 as has been previously described. As shown most clearly in Figures 8 and 9 each of the leaves 258, 260 has formed therein a cam surface slot 272. The cam surface slot in each leaf is eccentric with respect to the axis of pivotation of each leaf - that is, with respect to a pivot pin 266. In a manner that will be described subsequently, an actuator has boss portions that engage slots 272 to move the leaves toward and away from each other - that is, to move the leaves between their collapsed and expanded positions.

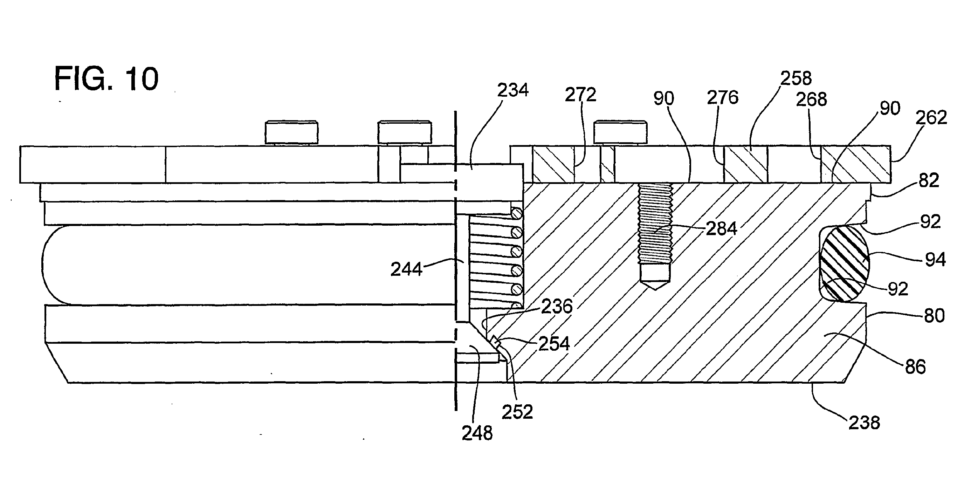

As further seen in Figures 8 and 9, each leaf 258, 260 has a first plug holder bolt slot 274, each being arcuate about a pivot pin 266. Further, each leaf has a second plug holder bolt slot 276. Each slot 276 communicates with the straight inner edge 264 of the leaf. The four openings formed in the pair of leaves - that is, slots 274 and 276 and each leaf, making a total of four slots, are not concerned with moving the leaves with respect to each other but provide openings to receive bolts so that a plug holder, as will now be described can be mounted on the plug body. The plug holder is identified generally by the numeral 278 and is seen in Figures 11-15. Plug holder 278 has a flange portion 280 with four bolts 282. The bolts 282 thread into threaded recesses in the plug body top surface 90. Thus there are four threaded recesses 284, a portion of which are seen in Figures 10, 11 and 12.

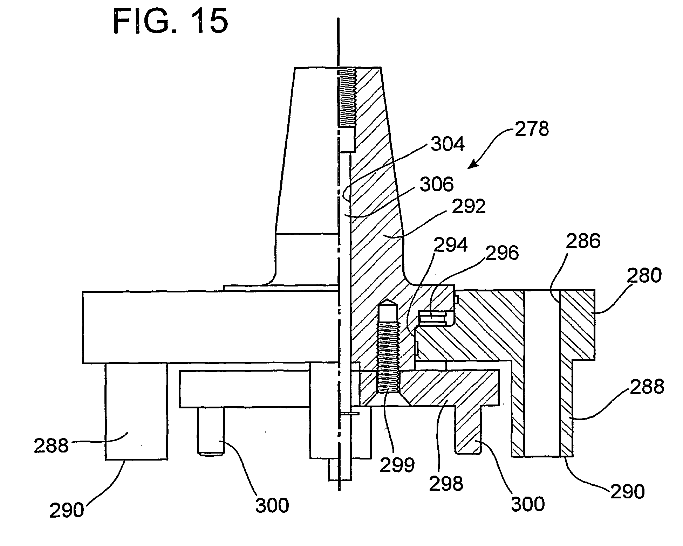

As seen in Figure 15, the plug holder flange portion 280 has an opening 286 for each of bolts 282 and the flange further has, for each opening 286 integral stand-offs 288. These integral tubular stand-offs have lower ends 290 that rest on plug body top surface 90 so that the main flange portion 280 of the plug holder is held above leaves 258 and 260.

Figures 11 and 12 show the plug holder 278 attached to plug body 86 in the condition that exists when the plug body is being inserted into or being removed from flange 60. After the plug body is inserted into flange 60 or any other cylindrical passageway to be closed and leaves 258 and 260 are moved to their expanded positions (as shown in Figure 12) plug holder 278 may be removed by unthreading the four bolts 282, this allows a cover to be placed over the flange.

Plug holder 278 includes a rotatable actuating portion 292 that is received in an opening 294 in flange portion 280 (see Figure 15). A bearing 296 provides for the easy rotation of actuating portion 292. Affixed to a lower end of actuating portion 292 is a plate 298 held in place by screws 299 so that actuating portion 292 remains rotatably secure to flange portion 280. Extending downwardly from plate 298 are two opposed boss portions 300. A boss portion 300 extends within the cam surface slots 272 in each of leaves 258 and 260. Cam surface slots 272 are eccentric with respect to the rotational axis of actuating portion 292 of plug holder 278 so that as the actuator portion is rotated the interaction of boss portions 300 and cam surface slots 272 moves leaves 258 and 260 between their collapsed and expanded positions.

As has been previously stated, it is important that for safety reasons that any pressure below the closure member 86 be relieved before effort is made to release the closure member from its sealed position within the interior of a cylindrical opening and for this reason provision is made to open a bypass passageway before leaves 258 and 260 can be retracted from their expanded positions (as shown in Figure 9) to their collapsed positions (as shown in Figure 8). When the leaves are in their expanded positions, a spring bias valve head 248 is moved into a closed position (as seen in Figure 10) closing passageway 236 through plug body 86. The upward movement of valve head 248 and correspondingly stem 244 moves cylindrical guide 234 to an upward position as shown in Figure 9 and in Figure 10. In this upward position, cylindrical guide 234 is positioned between the inner edges 264 of each of the plates thereby preventing the plates from moving from their expanded positions (as shown in Figure 9) to their collapsed positions (as shown in Figure 8). To accommodate cylindrical guide 234, the straight inner edge 264 of each leaf has a shallow depth semicircular recess 302 therein.

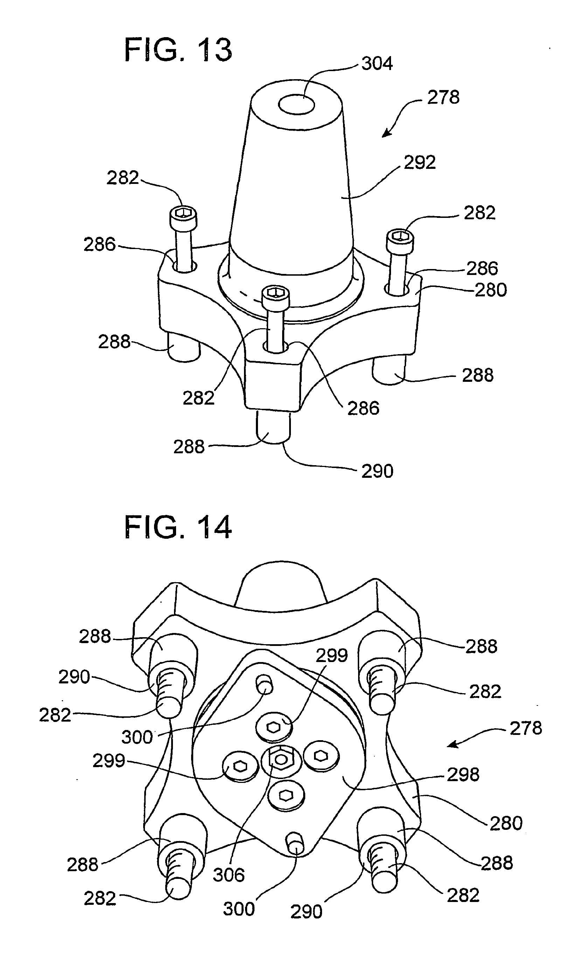

Plug holder actuator portion 292 has a central opening 304 therethrough (see Figures 13 and 15). With plug holder 278 attached to the upper surface of plug body 86 that has been secured within a cylindrical opening, the leaves cannot be moved toward their collapsed positions until action has been taken to alleviate any pressure differential across the plug body. A rod 306 is extended downwardly through central opening 304 in plug holder 278 to engage cylindrical guide 234. Downward force on rod 306 depresses central guide 234 and thereby stem 244 having valve head 248 thereon to open a passage for fluid flow through opening 236 in the plug body. The operator will know when flow through this opening ceases thereby indicating that pressure below plug body 86 has been relieved. While holding down on rod 306, depressing cylindrical guide 234, the operator can then rotate plug holder actuator portion 292 to cause leaves 258 and 260 to move toward each other. The operator then may remove the closure member from within the flange thereby fully exposing the opening through the flange for any desired purpose.

The embodiment of Figures 8 through 15 has advantages over the earlier embodiment as illustrated in Figures 1 through 7. One of the significant advantages is the use of leaves 258, 260 that are made of flat plates and that have large surfaces to slide upon the planar upper surface 90 of the plug body. This substantially alleviates any problem of warpage or twisting that can happen with leaves of other configurations.

Further, the system of Figures 8-15 employs direct mechanical coupling for moving the leaves between collapsed and expanded positions that does not require linkages of any kind. In addition, the positive locking of the leaves in their expanded positions does not depend on any linkages that could fail. The system employs a sturdy cylindrical guide 234 that is directly interposed between peripheral edges of the leaves to ensure that the leaves cannot be retracted to their collapsed positions without the passage through the plug body being open to relieve any pressure across the plug body.

It is understood that the invention is not limited to the embodiments set forth herein for purposes of exemplification, but is to be limited only by the scope of the attached claims.

## Claims

1. A removable closure member positionable in a cylindrical opening (68), the cylindrical opening having a circumferential slot (76) comprising:
a plug body (86) having a top surface (90), and an external cylindrical surface (80) and being removably and sealably receivable within the cylindrical opening (68);
a first and a second leaf (258, 260) each made of flat plate and having an outer substantially semi-cylindrical edge (262), a first end portion of each of said leaves being pivotally secured to said plug body top surface (90) permitting each said leaf (258, 260) to be pivoted between a retracted position in which said outer edge (262) of each leaf (258, 260) is within said plug body cylindrical surface (80) and an expanded position in which said outer edge (262) of each said leaf (258, 260) is beyond said plug body cylindrical surface (80) and receivable within the circumferential slot (76) of a cylindrical opening (68);
a plug holder (278) removably attachable to said plug body top surface (90) and having a rotatable portion (292) for pivoting said leaves between said retracted and expanded positions, **characterized in that**
it further comprises a bypass opening (236) extending through the plug body (86) including a valve (248) biased to closed position normally preventing the passage of fluid therethrough, the valve (248) being displayable to an open position by downward mechanical force applied by a rod (306) extending through said plug holder (278) and a safety lock (234) arranged to normally maintain leaves (258, 260) in said expanded positions, said safety lock (234) being actuated by the rod (306) so that the downward movement of the rod (306) moves the safety lock (234) to an unlocked position,
and **in that** each leaf has a substantially straight inner edge (264) substantially corresponding to the diameter of the outer edge (262).

2. A removable closure system according to claim 1, **characterized in that** each said leaf (258, 260) has a first end (196) and a second end (198), each leaf being hinged to said plug body adjacent said first end thereof, the leaves (258, 260) being arranged so that said first end of said first leaf (258) is substantially diametrically opposed to said first end of said second leaf (260) as said leaves are positioned on said plug body top surface (90).

3. A removable closure member according to any one of claims 1 or 2, **characterized in that** each said leaf has at least one slot (274) therethrough and wherein said plug holder is secured to said plug body by bolts (282) extending from said plug holder through said slots in said leaves.

4. A removable closure member according to any one of claims 1 to 3, **characterized in that** said leaves (258, 260) rest upon the top surface (90) of said cylindrical plug, wherein said leaves each has a cam surface (272), the rotatable portion (292) of said plug holder having boss portions (300) engaging said cam surfaces to move said leaves between said collapsed and expanded positions.

5. A removable closure member according to any one of claims 1 to 4, **characterized in that** each of said leaves has a guide slot (268) therethrough and including a guide bolt (270) extending from said plug body through said guide slot (268) of each leaf, said guide bolts (270) each having a head portion serving to retain said leaves (258. 260) pivotally displaceable but juxtaposed to said plug body (86).

6. A removable closure member according to any one of the preceding claims **characterized in that** said cylindrical plug external cylindrical surface (80) has a circumferential groove (92) therein,
an elastomeric toroidal member (94) being received in said cylindrical plug circumferential groove.

## Patentansprüche

1. Vorrichtung zum vorübergehenden Verschließen, die in einer zylindrischen Öffnung (68) angeordnet werden kann, wobei die zylindrische Öffnung einen entlang dem Umfang verlaufenden Schlitz (76) aufweist, umfassend:
einen Verschlusseinsatzkörper (86) mit einer Oberseite (90) und einer zylindrischen Außenfläche (80), der herausnehmbar und abdichtend in der zylindrischen Öffnung (68) aufgenommen werden kann,
einen ersten und einen zweiten Flügel (258, 260), die jeweils aus einer flachen Platte bestehen und einen im Wesentlichen halbzylindrischen Außenrand (262) aufweisen, wobei ein erster Endabschnitt eines jeden der Flügel an der Oberseite (90) des Verschlusseinsatzkörpers angelenkt ist, wodurch jeder Flügel (258, 260) zwischen einer eingezogenen Stellung, in der sich der Außenrand (262) jedes Flügels (258, 260) innerhalb der zylindrischen Fläche (80) des Verschlusseinsatzkörpers befindet, und einer ausgefahrenen Stellung, in der sich der Außenrand (262) jedes Flügels (258, 260) über die zylindrische Fläche (80) des Verschlusseinsatzkörpers hinaus erstreckt und in dem umfänglich verlaufenden Schlitz (76) einer zylindrischen Öffnung (68) aufgenommen werden kann, geschwenkt werden kann,
einen Verschlusseinsatzhalter (278), der abnehmbar an der Oberseite (90) des Verschlusseinsatzkörpers angebracht werden kann und einen drehbaren Abschnitt (292) aufweist, um die Flügel zwischen der eingezogenen Stellung und der ausgefahrenen Stellung zu schwenken, **dadurch gekennzeichnet, dass**
sie des Weiteren eine Umgehungsöffnung (236) umfasst, die sich durch den Verschlusseinsatzkörper (86) hindurch erstreckt und ein Ventil (248) enthält, das in die geschlossene Stellung vorgespannt ist und im Ruhezustand das Durchtreten von Fluid dort hindurch verhindert, wobei das Ventil (248) in eine offene Stellung verschoben werden kann, indem eine abwärts gerichtete mechanische Kraft durch einen Stab (306) ausgeübt wird, der sich durch den Verschlusseinsatzhalter (278) hindurch erstreckt, und eine Sicherheitsverriegelung (234) enthält, die so konfiguriert ist, dass sie im Ruhezustand die Flügel (258, 260) in der ausgefahrenen Stellung hält, wobei die Sicherheitsverriegelung (234) durch den Stab (306) so betätigt wird, dass die Abwärtsbewegung des Stabes (306) die Sicherheitsverriegelung (234) in eine entriegelte Stellung bewegt,
und dass jeder Flügel einen im Wesentlichen geraden Innenrand (264) aufweist, der im Wesentlichen dem Durchmesser des Außenrandes (262) entspricht.

2. Vorrichtung zum vorübergehenden Verschließen nach Anspruch 1, **dadurch gekennzeichnet, dass** jeder Flügel (258, 260) ein erstes Ende (196) und ein zweites Ende (198) hat, wobei jeder Flügel an dem Verschlusseinsatzkörper neben seinem ersten Ende angelenkt ist, wobei die Flügel (258, 260) so angeordnet sind, dass das erste Ende des ersten Flügels (258) dem ersten Ende des zweiten Flügels (260) im Wesentlichen diametral gegenüberliegt, wenn die Flügel auf der Oberseite (90) des Verschlusseinsatzkörpers angeordnet sind.

3. Vorrichtung zum vorübergehenden Verschließen nach einem der Ansprüche 1 oder 2, **dadurch gekennzeichnet, dass** durch jeden Flügel hindurch wenigstens ein Schlitz (274) ausgebildet ist, und wobei der Verschlusseinsatzhalter an dem Verschlusseinsatzkörper mittels Schrauben (282) befestigt ist, die sich von dem Verschlusseinsatzhalter durch die Schlitze in den Flügeln erstrecken.

4. Vorrichtung zum vorübergehenden Verschließen nach einem der Ansprüche 1 bis 3, **dadurch gekennzeichnet, dass** die Flügel (258, 260) auf der Oberseite (90) des zylindrischen Verschlusseinsatzes aufliegen, wobei die Flügel jeweils eine Nockenfläche (272) aufweisen, wobei der drehbare Abschnitt (292) des Verschlusseinsatzhalters Buckelabschnitte (300) aufweist, welche die Nockenflächen in Eingriff nehmen, um die Flügel zwischen der eingezogenen und der ausgefahrenen Stellung zu bewegen.

5. Vorrichtung zum vorübergehenden Verschließen nach einem der Ansprüche 1 bis 4, **dadurch gekennzeichnet, dass** durch jeden der Flügel hindurch ein Führungsschlitz (268) ausgebildet ist und dass jeder Flügel eine Führungsschraube (270) enthält, die sich von dem Verschlusseinsatzkörper durch den Führungsschlitz (268) jedes Flügels hindurch erstreckt, wobei die Führungsschrauben (270) jeweils einen Kopfabschnitt aufweisen, der dazu dient, die Flügel (258, 260) schwenkend verschiebbar, aber neben dem Verschlusseinsatzkörper (86) zu halten.

6. Vorrichtung zum vorübergehenden Verschließen nach einem der vorangehenden Ansprüche, **dadurch gekennzeichnet, dass** in der zylindrischen Außenfläche (80) des zylindrischen Verschlusseinsatzes eine umfänglich verlaufende Nut (92) ausgebildet ist,
wobei ein elastisches ringförmiges Element (94) in der umfänglich verlaufenden Nut des zylindrischen Verschlusseinsatzes aufgenommen ist.

## Revendications

1. Elément de fermeture amovible pouvant être positionné dans une ouverture cylindrique (68), l'ouverture cylindrique ayant une fente circonférentielle (76), comportant :
un corps de bouchon (86) ayant une surface supérieure (90), et une surface cylindrique externe (80), et pouvant être reçu de manière amovible et de manière étanche dans l'ouverture cylindrique (68) ;
des première et seconde lames (258, 260), constituées chacune d'une plaque plate, et ayant un bord extérieur sensiblement semi-cylindrique (262), une première extrémité de chacune desdites lames étant fixée de manière pivotante sur ladite surface supérieure de corps de bouchon (90), en permettant à chacune desdites lames (258, 260) d'être pivotée entre une position rétractée, dans laquelle ledit bord extérieur (262) de chaque lame (258, 260) est dans ladite surface cylindrique de corps de bouchon (80), et une position déployée, dans laquelle ledit bord extérieur (262) de chacune desdites lames (258, 260) est au-delà de ladite surface cylindrique de corps de bouchon (80), et peut être reçu dans la fente circonférentielle (76) d'une ouverture cylindrique (68) ;
un porte-bouchon (278) pouvant être fixé de manière amovible sur ladite surface supérieure de porte-bouchon (90), et ayant une partie rotative (292) pour faire pivoter lesdites lames entre lesdites positions rétractées et déployées, **caractérisé en ce que**
il comporte de plus une ouverture de dérivation (236) s'étendant à travers le corps de bouchon (86), incluant une soupape (248) rappelée en position fermée en empêchant normalement le passage de fluide à travers celle-ci, la soupape (248) pouvant être déployée en une position ouverte par une force mécanique vers le bas appliquée par une tige (306) s'étendant à travers ledit porte-bouchon (278) et un verrou de sécurité (234) agencé pour maintenir normalement les lames (258, 260) dans lesdites positions déployées, ledit verrou de sécurité (234) étant actionné par la tige (306) de sorte que le déplacement vers le bas de la tige (306) déplace le verrou de sécurité (234) vers une position déverrouillée,
et **en ce que** chaque lame a un bord intérieur sensiblement droit (264) correspondant sensiblement au diamètre du bord extérieur (262).

2. Système de fermeture amovible selon la revendication 1, **caractérisé en ce que** chacune desdites lames (258, 260) a une première extrémité (196) et une seconde extrémité (198), chaque lame étant articulée sur ledit corps de bouchon en un endroit adjacent à ladite première extrémité de celle-ci, les lames (258, 260) étant agencées de sorte que ladite première extrémité de ladite première lame (258) est sensiblement diamétralement opposée à ladite première extrémité de ladite seconde lame (260) lorsque lesdites lames sont positionnées sur ladite surface supérieure de corps de bouchon (90).

3. Elément de fermeture amovible selon la revendication 1 ou 2, **caractérisé en ce que** chacune desdites lames a au moins une fente (274) à travers celle-ci, et dans lequel ledit porte-bouchon est fixé sur ledit corps de bouchon par des boulons (282) s'étendant à partir dudit porte-bouchon à travers lesdites fentes dans lesdites lames.

4. Elément de fermeture amovible selon l'une quelconque des revendications 1 à 3, **caractérisé en ce que** lesdites lames (258, 260) sont en appui sur la surface supérieure (90) dudit bouchon cylindrique, dans lequel lesdites lames ont chacune une surface de came (272), la partie rotative (292) dudit porte-bouchon ayant des parties de bossage (300) venant en prise avec ladite surface de came pour déplacer lesdites lames entre lesdites positions rabattues et déployées.

5. Elément de fermeture amovible selon l'une quelconque des revendications 1 à 4, **caractérisé en ce que** chacune desdites lames a une fente de guidage (268) à travers celle-ci, et incluant un boulon de guidage (270) s'étendant à partir dudit corps de bouchon à travers ladite fente de guidage (268) de chaque lame, lesdits boulons de guidage (270) ayant chacun une partie de tête servant à retenir lesdites lames (258, 260) pouvant être déplacées de manière pivotante, mais juxtaposées sur ledit corps de bouchon (86).

6. Elément de fermeture amovible selon l'une quelconque des revendications précédentes, **caractérisé en ce que** ladite surface cylindrique externe de bouchon cylindrique (80) a une gorge circonférentielle (92) dans celle-ci, un élément toroïdal élastomérique (94) étant reçu dans ladite gorge circonférentielle de bouchon cylindrique.
